(19) Europäisches Patentamt
European Patent Office
Office européen des brevets

(11) EP 2 308 903 A1

# (12) EUROPEAN PATENT APPLICATION

(43) Date of publication:
**13.04.2011 Bulletin 2011/15**

(21) Application number: **09171728.0**

(22) Date of filing: **30.09.2009**

(51) Int Cl.:
***C08F 4/655*** *(2006.01)* ***C08F 4/651*** *(2006.01)*
***C08F 4/02*** *(2006.01)* *C08F 210/16* *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Borealis AG**
**1220 Vienna (AT)**

(72) Inventors:
- **Johansson, Solveig**
**444 47, Stenungsund (SE)**
- **Garoff, Thomas**
**00840, Helsinki (FI)**
- **Waldvogel, Päivi**
**06450, Porvoo (FI)**

(74) Representative: **Campbell, Neil Boyd**
**Dehns**
**St Bride's House**
**10 Salisbury Square**
**London**
**EC4Y 8JD (GB)**

## (54) Procatalyst for olefin polymerization

(57) Process for preparing an improved solid procatalyst of a Ziegler-Natta catalyst system comprising the following steps:

a) reacting an metal alkyl with the formula (I) $Al(R^1)_3$, wherein each $R^1$ independently represents an alkyl group of 1 to 6 carbon atoms with an alkyl metal halide compound of the formula (II) $Al(R^2)_mX_{3-m}$, wherein each $R^2$ independently represents an alkyl group of 1 to 6 carbon atoms; each X is independently a halogen; $0 \leq m < 3$ and m may or may not be an integer,

whereby the metal alkyl of the formula (I) or the alkyl metal halide of the formula (II) has been first contacted with an inert carrier, to give a first reaction product

b) treating the first reaction product with oxygen ($O_2$) or a gas containing oxygen ($O_2$) to give a second reaction product ,

c) either the first reaction product or the second reaction product is reacted with a magnesium compound of the formula (III) $R^3_n(OR^4)_{2-n}Mg$, wherein $R^3$ and $R^4$ independently represent a $C_1$-$C_{20}$ alkyl group and $0 \leq n \leq 2$ and n may or may not be an integer,

yielding a procatalyst precursor

d) optionally contacting the procatalyst precursor with an alkyl metal halide compound of the formula (II) and/or with a magnesium compound of the formula (III), and

e) contacting either the procatalyst precursor or the reaction product of step d) with a titanium halide compound having the formula (IV) $(OR^5)_pTiX^2_{4-p}$, wherein each $R^5$ independently represents a $C_1$-$C_{20}$ alkyl group, each $X^2$ is independently a halogen; $0 \leq p \leq 3$ and p may or may not be an integer,

in order to yield the solid procatalyst and its use for the production of polyethylene homo- or copolymers with a PDI below 4 down to 3.

EP 2 308 903 A1

## Description

The present invention relates to a process for the preparation of a procatalyst of a Ziegler-Natta composition which is suitable for production of olefin polymers, to the procatalyst itself and to its use.

It is known that catalyst systems of the Ziegler-Natta (ZN) type consist of a catalyst comprising at least one compound of a transition metal, such as titanium or vanadium, and of a cocatalyst comprising at least one organometallic compound of a metal such as aluminum or boron. Furthermore it is known that the properties of these catalysts can be greatly affected when the transition metal compound is employed with a support consisting of a solid inorganic compound, such as silica or $MgCl_2$.

In a process for preparing a supported catalyst the properties of the support and the process for preparing the catalyst, which generally comprises fixing the transition metal compound on said support, are of a very great importance for the catalyst characteristic. These characteristics are of great importance for the performance of the catalyst in a reaction of homopolymerization or copolymerization of olefins.

Various ZN procatalysts and methods for preparing such ZN procatalysts are known in the state of art.

EP 0 688 794 describes procatalysts for the production of ethylene polymers which are produced by contacting an inert support with an alkyl metal chloride, like EADC to give a first reaction product. This first reaction product is further contacted with a reaction product of an alcohol, like 2-ethyl-1hexanol, and a magnesium containing compound, like butyl octyl magnesium, to give a second reaction product, which is further reacted with a titanium compound.

However, the employment of this type of catalyst family often creates problems involving a high amount of residues in the final polymeric product. That disadvantage is caused by high amounts of residues in the catalyst. Furthermore, said residues are responsible for a decreased catalytic activity of the catalyst itself. Metal alcoholates, like aluminium alcoholates, constitute the majority of said residues. These aluminium alkoholates are derived from the reaction between an alkoxy-magnesium compound and a halogen containing metal alkyl compound used for impregnation of the solid carrier support. Since suitable alkoxy-magnesium compounds are restricted to derivatives of higher and/or branched alcohols - due to the fact that they have to be soluble in inert diluents like pentane - high molecular weight aluminium alcoholates with longer carbon chains are left in the catalyst causing low activity which results in inhomogeneities in the polymer.

As an improvement, WO 03/004537 suggest to use dialkyl-magnesium compounds with low molecular weight alkyl residues, like butyl-ethylmagnesium or di-butylmagnesium, instead of prior art-alkoxy-magnesium compounds with alkyl groups with more than 6 carbons. The use of such dialkyl-magnesium compounds during the process of preparation of the procatalyst yields metal alcoholates with alkoxy groups having a lower molecular weight, meaning less residues in the final procatalyst.

The inherent high reductive power of the dialkyl-magnesium compounds is attenuated in the process of preparing the procatalyst by using a moderator compound which renders said dialkyl-magnesium compound less harmful in a controlled manner, like a HCl splitting compound or oxygen.

If oxygen or gas containing oxygen, e.g. dry air is used as the moderator compound, preferably first silica, used as support, is contacted with the dialkyl-magnesium compound and then the thus obtained modified silica is contacted with the oxygen.

According to Example 4 of WO 03/004537 such a catalyst had an activity, respectively productivity in polyethylene homopolymerization of 4.1 kg PE/(g catalyst and hour). The $MFR_2$ of the produced polymer was 0.47 g/10 min and the $MFR_{21}$ was 14.1 g/10 min.

For typical ZN catalyst systems it is known that the control of the polydispersity index (PDI = Mw/Mn), in particular if narrow PDI polymers are desired, is difficult to accomplish, so that for typical narrow PDI polyolefin materials single site catalysts (SSC) are used. Since these single site catalysts are much more expensive, more poison sensitive and more difficult to operate in the plant than ZN catalysts, it would however be a great advantage if also ZN catalysts, which allow a control of PDI, in particular in combination with reasonable high catalyst activity, would be available.

It is of particular interest to obtain a catalyst in particulate form which has a high catalyst activity and results in good and desired polymer properties and enables the control of PDI. Accordingly, although much development work has been done in the field of Ziegler-Natta catalysts, there remains a continuing search for alternative or improved solid ZN procatalyst with desirable properties, such as high activity, no need of promoter, high stability, suitable kinetics and even comonomer distribution, which allow the production of polyethylene polymers with narrow PDI.

It was therefore an objective of the present invention to provide a method for preparing a procatalyst of a Ziegler-Natta catalyst composition which has a high activity in polymerizing olefins, an improved morphology and a good balance of activity under different hydrogen partial pressures, which enables for the production of polyethylene polymers with narrow PDI values down to 3.0 and good homogeneity of polymer.

In order to solve the above-identified objects, the present invention provides a process as defined in claim 1. Preferred embodiments thereof are described in the dependent subclaims as well as in the following description. The present invention furthermore provides the ZN-polymerization procatalyst itself, a ZN-polymerization catalyst system as

well as the use thereof for the polymerization of olefins.

Typically the ZN-procatalyst of the present invention enables the preparation of narrow PDI polymers, such as polymers with a PDI of below 4, although a ZN catalyst system is employed for polymerization.

The present invention enables the preparation of polymers with PDI values of as low as 3.8 or below, even below 3.6, such as from 3.3 to 3.5. It is even possible to achieve a PDI as low as 3.0 by using the procatalyst and catalyst system according to the present invention.

The present invention further comprehends a ZN-polymerization catalyst system comprising the ZN-procatalyst prepared as aforesaid, in association with an alkyl aluminium cocatalyst and the use of that polymerization catalyst system for the polymerization of ethylene, optionally in the presence of one or more comonomers.

The present invention also provides a process for polymerizing ethylene, optionally in the presence of one or more comonomers.

Due to the use of the procatalyst in accordance with the present invention it is possible to control the PDI of the polymer produced to low values, of 3.8 or less, preferably 3.6 or less and more preferably 3.4 or less. PDI values of 3.3 to 3.5 and even as low as 3.0 are possible in accordance with the present invention by using the procatalyst and catalyst system of the present invention.

Definitions:

The term "procatalyst" refers to the solid catalyst component.

The terms "catalyst", "Ziegler-Natta catalyst system" or "polymerization catalyst" refer to the active catalyst, which has been obtained by activating the solid catalyst component with the cocatalyst.

It has been surprisingly found by the inventors of the present invention that catalyst particles having a good morphology, size and uniform particle size distribution can be obtained by the way of preparing Ziegler-Natta (ZN) type procatalysts, for use in ethylene polymerization, showing furthermore an increase of the control of molecular weight distribution and of XS. The produced procatalyst according to the invention have excellent morphology, good particle size distribution and yield polymerization catalysts having a fully satisfactory activity and allowing the desired control of the PDI.

According to the replica effect, the polymer particles produced by using the inventive catalyst have very good morphological properties, too.

The present invention is therefore directed to a process for preparing an improved solid procatalyst of a Ziegler-Natta catalyst system comprising the following steps:

a) reacting an metal alkyl with the formula (I) $Al(R^1)_3$, wherein each $R^1$ independently represents an alkyl group of 1 to 6 carbon atoms with
an alkyl metal halide compound of the formula (II)
$Al(R^2)_mX_{3-m}$, wherein each $R^2$ independently represents an alkyl group of 1 to 6 carbon atoms; each X is independently a halogen; $0 \leq m < 3$ and m may or may not be an integer
whereby the metal alkyl of the formula (I) or the alkyl metal halide of the formula (II) has been first contacted with an inert carrier, to give a first reaction product
b) treating the first reaction product with oxygen ($O_2$) or a gas containing oxygen ($O_2$) to give a second reaction product ,
c) either the first reaction product or the second reaction product is reacted with a magnesium compound of the formula (III)
$R^3_n(OR^4)_{2-n}Mg$, wherein $R^3$ and $R^4$ independently represent a $C_1$-$C_{20}$ alkyl group and $0 \leq n \leq 2$ and n may or may not be an integer,
yielding a procatalyst precursor
d) optionally contacting the procatalyst precursor with an alkyl metal halide compound of the formula (II)
$Al(R^2)_mX_{3-m}$, wherein each $R^2$ independently represents an alkyl group of 1 to 6 carbon atoms; each X is independently a halogen; $0 \leq m < 3$ and m may or may not be an integer and/or with
a magnesium compound of the formula (III)
$R^3_n(OR^4)_{2-n}Mg$, wherein $R^3$ and $R^4$ independently represent a $C_1$-$C_{20}$ alkyl group and $0 \leq n \leq 2$ and n may or may not be an integer, and
e) contacting either the procatalyst precursor or the reaction product of step d) with a titanium halide compound having the formula (IV)
$(OR^5)_pTiX^2_{4-p}$, wherein each $R^5$ independently represents a $C_1$-$C_{20}$ alkyl group, each $X^2$ is independently a halogen; $0 \leq p \leq 3$ and p may or may not be an integer,
in order to yield the solid procatalyst.

The method for producing an improved solid procatalyst of a Ziegler-Natta composition will be described in detail hereinafter.

As stated above, solid procatalysts of the invention are formed by contacting at least:

a metal alkyl of the formula (I), an alkyl metal halide compound of the formula (II), an inert carrier, a magnesium compound of the formula (III), oxygen or an oxygen containing gas and
a titanium compound of the formula (IV).

The first reactant is a metal alkyl with the formula (I) $Al(R^1)_3$, wherein each $R^1$ independently represents an alkyl group of 1 to 6 carbon atoms.

Examples of suitable metal alkyl compounds are trimethylaluminium, triethylaluminium, triisobutylaluminium, etc.. Preferably triethylaluminium is used.

The second reactant is an alkyl metal halide compound of the formula (II)

$$Al(R^2)_mX_{3-m},$$

wherein each $R^2$ independently represents an alkyl group of 1 to 6 carbon atoms; each X is independently a halogen; $0 \leq m < 3$ and m may or may not be an integer.

In the formula (II) $R^2$ is an alkyl group of 1 to 6 carbon atoms which can be linear or branched, like methyl, ethyl, n-propyl, i-propyl, n-butyl, i-butyl, pentyl or hexyl.

X represents a halogen, like chlorine, fluorine or bromine, preferably chlorine.

Examples for the alkyl metal halide compound of the formula (II) are dialkyl aluminium chlorides, such as dimethyl aluminium chloride, diethyl aluminium chloride, diisobutyl aluminium chloride, or alkyl aluminium dichlorides, such as ethyl aluminium dichloride (EADC) or methyl aluminium dichloride.

Preferably EADC is used as alkyl metal halide.

The third reactant is a magnesium compound of the formula (III)

$$R^3_n(OR^4)_{2-n}Mg$$

wherein $R^3$ and $R^4$ independently represent a $C_1$-$C_{20}$ alkyl group, preferably a $C_2$-$C_{16}$ alkyl group and $0 \leq n \leq 2$ and n may or may not be an integer.

Thus, the magnesium compound may be magnesium dialkyl optionally having one or more halogen or hetero atoms, such as butyl-octyl-magnesium, butyl-ethyl magnesium, diethyl magnesium or dibutyl magnesium.

The magnesium compound may also be a magnesium dialkoxy compound. Then, the compound has a general formula Mg $(OR^4)_2$, where each $R^4$ is independently a $C_2$-$C_{16}$ alkyl optionally having one or more halogen or hetero atoms. In particular, the compound where $R^4$ is 2-ethyl-1-hexanol or 2-methyl-1-pentanol is preferred.

One of the purposes of the invention is to obtain a high activity procatalyst despite high hydrogen concentrations.

Then the magnesium compound of the procatalyst can have both Mg-C bonds and Mg-O-C bonds. These bonds may be in the same magnesium compound such as RMgOR, or in different magnesium compounds. Thus mixtures of $(R^3)_2Mg$ and $Mg(OR^4)_2$ are within the scope of the invention, as well as mixtures of $(R^3)_2Mg$ and $R^3MgOR^4$ and mixtures of $R^3MgOR^4$ and $Mg(OR^4)_2$, each having optionally one or more halogen or hetero atoms. Preferably, the compound or mixture containing hydrocarbyl and hydrocarbyl oxide linked to magnesium is hydrocarbon soluble, which gives a solution capable of effectively penetrating the voids and pores of the support.

Preferably said compound or mixture containing hydrocarbyl and hydrocarbyl oxide linked to magnesium is a contact product of a di-$C_1$-$C_{10}$ alkyl magnesium and a $C_1$-$C_{12}$ alcohol. Preferably, the di- $C_1$-$C_{10}$ alkyl magnesium is dibutyl magnesium, butyl ethyl magnesium, diethyl magnesium or butyl octyl magnesium. Preferably, the $C_1$-$C_{12}$ alcohol is a branched alcohol, preferably a 2-alkyl alkanol, most preferably 2-ethyl-1-hexanol or 2-methyl-1-pentanol.

When the compound or mixture containing hydrocarbyl and hydrocarbyl oxide linked to magnesium is a contact product of a di- $C_1$-$C_{10}$ alkyl magnesium and a $C_1$-$C_{12}$ alcohol, the corresponding molar ratio di- $C_1$-$C_{10}$ alkyl magnesium to $C_1$-$C_{12}$ alcohol is preferably 1:1.3 to 1:4, more preferably 1:1.5 to 1:3.5, most preferably 1:1.8 to 1:3.1.

Furthermore an inert carrier is used to prepare the inventive procatalyst.

According to a first variant the metal alkyl of the formula (I) is first contacted with the inert carrier before the reaction with the alkyl metal halide compound of the formula (II). (Variant A) to give a first reaction product, which can optionally be reacted with a magnesium compound of the formula (III) before being treated with oxygen or a gas containing oxygen.

A further possibility is that the alkyl metal halide compound of the formula (II) is first contacted with the inert carrier before the reaction with the metal alkyl of the formula (I) (Variant B) to give a first reaction product, which can optionally be reacted with a magnesium compound of the formula (III) before being treated with oxygen or a gas containing

oxygen.

The inert carrier, which has been contacted with the alkyl metal halide compound of the formula (II) first, preferably may, in this case, be reacted with a mixture of the metal alkyl of the formula (I) and the magnesium compound of the formula (III) before being treated with oxygen or a gas containing oxygen.

As inert carrier any suitable carrier known in the art, in particular a metal oxide or a metal oxide mixture, such as silica, alumina, silica-alumina and silica-titania, can be used. Preferably silica is used as inert carrier.

The surface area, pore volume and particle size of the silica can be chosen according to the requirements of the specific polymerization process, in which the catalyst will be used. Typically, silica particles having a surface area in the range of from about 10 to about 700 $m^2/g$ (BET method), pore volume in the range of from about 0.1 to about 6.0 $cm^3/g$ and average particle size in the range of from about 6 to about 500 $\mu m$ can be used.

It is further preferred that the carrier material is calcinated, i.e. heat treated under air and then with a non-reactive gas such as nitrogen. This treatment is preferably done at a temperature in excess of 100 °C, more preferably 200 °C or higher, e.g. 200-800 °C, particularly about 600 °C. The calcination treatment is preferably effected for several hours, e.g. 2 to 30 hours, more preferably about 4 hours.

The metal alkyl of the formula (I) or the alkyl metal halide of the formula (II) can be deposited on the support material as the first chemicals in this catalyst synthesis. It is preferable, if the molar ratio between the metal alkyl of the formula (I) respectively the alkyl metal halide of the formula (II) and the surface hydroxyls of the inorganic oxide is >1. The contacting of the metal alkyl respectively alkyl metal halide with the carrier may be done either by directly mixing the metal alkyl respectively alkyl metal halide with the carrier or mixing a solution of the metal alkyl respectively alkyl metal halide in an inert diluents wit said carrier. The contacting may thus be carried out as "dry mixing", where the total volume of the metal alkyl respectively alkyl metal halide and the inert diluents may be such that it does not exceed the pore volume of the carrier. On the other hand, the conducting may also be carried out in slurry, where the total liquid volume is sufficient to suspend said carrier. The conducting can be carried out in a wide range of temperatures, preferably between 0°C and 60°C, more preferably at room temperature or near room temperature, e.g. between 15 and 35°C. The chemical addition times and the addition techniques have to be adjusted to give an even distribution of the chemical in the support material.

Suitable diluents are $C_5$-$C_8$ alkanes like pentane, hexane and heptanes.

According to Variant A the carrier is first conducted with the metal alkyl of the formula (I), which yields a modified carrier. As the next step this modified carrier is conducted with the alkyl metal halide of the formula (II).

According to Variant B the carrier is first conducted with the alkyl metal halide of the formula (II).

In both cases it is recommendable to contact the alkyl metal halide compound directly or indirectly with the carrier in the form of a solution, which penetrates the pores of the carrier and reacts with as many of the surface groups or earlier deposited reagent molecules as possible. Thus, according to one embodiment, said alkyl metal halide compound is contacted with said inorganic support so that the aluminium compound is in hydrocarbon solution, preferably in a 5-25 w-% hydrocarbon solution. Suitable solvents are $C_5$-$C_8$ alkanes such as pentane, hexane and heptane.

The so obtained first reaction products optionally can be reacted with a magnesium compound of the formula (III) before the treatment with oxygen or an oxygen containing gas. In this case a magnesium compound of the formula (III), wherein each $R^3$ and $R^4$ is independently a $C_{1-20}$ alkyl group, e.g. a $C_{2-15}$ group, preferably a $C_{3-10}$ group, e.g. an alkyl, cycloalkyl, alkylcycloalkyl or cycloalkylalkyl, wherein "alkyl" used as alone or as part of another option can be linear or branched; e.g. each $R^3$ and $R^4$ is independently an ethyl, n-propyl i-propyl, n-butyl, i-butyl, pentyl, hexyl, heptyl, octyl; $0 \leq n \leq 2$ and n may or may not be an integer, is used.

In a preferred embodiment of the invention, a magnesium compound of formula (III), wherein each $R^3$ and $R^4$ is independently as defined above; and $0 \leq n \leq 2$, is used, which may be commercially available or, preferably, is a reaction mixture, respectively conduct product of a of a di-$C_1$-$C_{10}$ alkyl magnesium and a $C_1$-$C_{12}$ alcohol.

The above mentioned reaction mixture is preferably obtained by contacting, in a hydrocarbon solvent (e.g. heptane),

(i) a di-$C_1$-$C_{10}$ alkyl magnesium compound of formula $Mg(R^3)_2$ (V), wherein $R^3$ is a $C_1$-$C_{10}$ alkyl group, e.g. each $R^3$ is independently methyl, ethyl, propyl, butyl, pentyl, hexyl, heptyl or octyl, e.g. di(n-butyl) magnesium, n-butyl sec-butyl magnesium, butyl ethyl magnesium or butyl octyl magnesium, preferably butyl ethyl magnesium (BEM) or butyl octyl magnesium (BOMAG-A), most preferably BOMAG-A;
with (ii) an $C_1$-$C_{12}$ alcohol of formula $R^4OH$, wherein $R^4$ is a $C_1$-$C_{12}$ alkyl group.

Preferably $R^4$ is a $C_{3-12}$ cycloalkyl or branched or unbranched $C_{3-12}$ alkyl, preferably a $C_{4-10}$ cycloalkyl or a branched or unbranched $C_{4-10}$ alkyl, such as cyclopentanol, 2-methyl-2-propanol, 2-ethyl-1-butanol, 2-methyl-1-pentanol, 2-ethyl-pentanol, 2-ethyl-1-hexanol, n-heptanol, n-octanol and decanol, preferably 2-ethyl-1-hexanol or 2-methyl-1-pentanol.

The alcohols which are usable to transform the magnesium hydrocarbyl to a magnesium hydrocarbyloxy complex soluble in a hydrocarbon solvent, are known in the art or can be readily determined by a skilled person. Said contact is effected in a temperature between 0 and 60 °C, preferably at 10 to 40 °C, e.g. at 20 to 30 °C. The reaction can be completed by heating the system at 50 to 60 °C for 10 to 100 min. Preferably the alcohol is added to the Mg solution. The molar ratio of Mg compound to $R^4OH$ (Mg:$R^4OH$) is preferably from 1:1.3 to 1:4, more preferably 1:1.5 to 1:3.5, most preferably 1:1.8 to 1:3.1.

For Variant B the magnesium compound is preferably mixed with the metal alkyl compound of formula (I) prior to contacting with the carrier.

The contacting of the carrier/metal alkyl/alkyl metal halide complex (Variant A) respectively of the carrier/alkyl metal halide complex (Variant B) with the magnesium compound may be carried out at any convenient temperature, but preferably at or near room temperature. Suitable temperature range is from about 15°C to about 70°C.

The contacting can be carried out either by mixing said carrier/metal alkyl/alkyl metal halide complex (Variant A) respectively of the carrier/alkyl metal halide complex (Variant B) with said magnesium compound or preferably, by mixing said carrier/metal alkyl/alkyl metal halide complex (Variant A) respectively of the carrier/alkyl metal halide complex (Variant B) with a solution of said magnesium compound in an inert solvent.

The time of contacting should be sufficient to allow a complete or nearly complete reaction between said carrier/metal alkyl/alkyl metal halide complex (Variant A) respectively of the carrier/alkyl metal halide complex (Variant B) and said magnesium compound. The contact time may be between about 1 hour and about 24 hours, preferably about 1 hour to about 6 hours.

A good deposition of the magnesium complex as a solution is achieved if the volume of the magnesium complex is about two times the pore volume of the support material. This is achieved if the concentration of the complex in hydrocarbon solvent is between 5 - 60 % in respect of the hydrocarbon used. The ratio between magnesium and chlorine in the alkyl metal chloride agent should be from 1:1.0 to 1:2.5. A good result is achieved if this ratio is from 1:1.5 to 1:2.3.

Solutions are suitably formed using an organic solvent that dissolves the compounds. Preferred solvents include inert hydrocarbons, e.g. linear or branched aliphatic, alicyclic or aromatic $C_{5-20}$ hydrocarbons, preferably $C_{6-12}$ hydrocarbons, wherein the ring systems may contain hydrocarbon, e.g. $C_{1-6}$ alkyl substituents, such as cyclohexane, hexane, heptane, octane or toluene, or any mixtures thereof. E.g. linear or branched alkanes, e.g. hexane, heptane or octane, may be used.

Thus, the first reaction product comprises at least a metal alkyl of the formula (I), an alkyl metal halide compound of the formula (II), an inert carrier and optionally a magnesium compound of the formula (III).

Next, in step b) this first reaction product is treated with oxygen or an oxygen containing gas, e.g. dry air.

Preferably the contacting of the first reaction product with oxygen, respectively an oxygen containing gas is carried out in slurry so that said first reaction product is suspended in a diluent and let the gas (e.g. $O_2$, dry air) bubble through the slurry under agitation.

The flow rate of oxygen or the oxygen containing gas is not critical and can - depending on the size of the reaction apparatus - vary in a broad range. Preferably oxygen or an oxygen containing gas is added in a flow rate of 0.1 to 10 l/min/g of the first reaction product.

The oxygen treatment can be carried out at a wide range of temperatures, preferably between 5 and 50°C, more preferably at or near room temperature, e.g. between 15 and 35°C and is carried out for about 1 to 120 min, preferably up to 60 min.

Suitable diluents are hydrocarbons, like $C_5$-$C_8$ alkanes, e.g. pentane, hexane and heptanes.

Furthermore the oxygen treatment is performed under normal pressure or under a slight over pressure, e.g. up to 0.5 bar over pressure compared to the pressure existing in the catalyst vessel. Preferably a slight over pressure is applied.

As a result of the adding oxygen to the first reaction product all metal-C bonds are changed into metal-O-C bonds and the reduction power of the catalyst becomes 0.

The amount of free oxygen in the final system should be below 10ppm in order to avoid that free oxygen acts as catalyst poison in the system.

Therefore, optionally a decanting procedure to get rid of excess of oxygen can be carried out after the oxygen treatment. In such a case diluent is removed, e.g. by decanting, fresh diluents is added and the procedure is repeated 1 to 5 times.

Furthermore alternatively or in addition a pressurising/depressurising procedure can be done to get rid of excess of oxygen, whereby the reactor is pressurised with oxygen free nitrogen, then depressurised. This procedure can be repeated 1 to 30 times.

The thus obtained second reaction product can be dried prior further contacting steps. For drying preferably pure and oxygen free nitrogen is used.

Subsequently a suitable diluent, preferably a hydrocarbons as defined above, e.g. pentane, hexane or heptane, particularly pentane is added to the second reaction product and further contacting steps can be carried out.

If the first reaction product does not already include the magnesium compound of the formula (III), the second

reaction product is reacted with the magnesium compound of the formula (III).

Preferably already the first reaction product is reacted with the magnesium compound of the formula (III).

The so obtained procatalyst precursor thus is the reaction product of a metal alkyl of the formula (I), an alkyl metal halide compound of the formula (II), an inert carrier, a magnesium compound of the formula (III) and oxygen or an oxygen containing gas.

In one further contacting step d) the obtained procatalyst precursor is optionally contacted with an alkyl metal halide compound of the formula (II)

$Al(R^2)_mX_{3-m}$, wherein each $R^2$ independently represents an alkyl group of 1 to 6 carbon atoms; each X is independently a halogen; $0 \le m < 3$ and m may or may not be an integer and/or with

a magnesium compound of the formula (III)

$R^3_n(OR^4)_{2-n}Mg$, wherein $R^3$ and $R^4$ independently represent a $C_1$-$C_{20}$ alkyl group and $0 \le n \le 2$ and n may or may not be an integer,

In the last step the procatalyst precursor or the reaction product of step d) is contacted with a a titanium halide compound having the formula (IV)

$$(OR^5)_pTiX^2_{4-p},$$

wherein each $R^5$ independently represents a $C_1$-$C_{20}$ alkyl group, each $X^2$ is independently a halogen, ; $0 \le p \le 3$ and p may or may not be an integer.

The procatalyst precursor or the reaction product of step d) is suspended in an organic solvent and treated at least with one transition metal compound, i.e. a titanium compound. The treatment step is preferably effected in a manner known in the art.

The titanium compound employed for the preparation of the procatalyst is soluble in the liquid hydrocarbon and is, in general, a compound in which the titanium has its maximum valency, that is to say valency 4. The titanium compound employed may be a compound of the general formula $(OR^5)_pTiX^2_{4-p}$ (IV) in which formula each $R^5$ independently denotes an alkyl group containing from 1 to 20 carbon atoms, preferably 1 to 12 carbon atoms, each $X^2$ independently denotes a halogen atom, such as bromine or chlorine, preferably chlorine, $0 \le p \le 3$ and p may or may not be an integer.

Among these compounds, titanium tetrachloride or titanium tetraisopropoxide are preferably employed. Most preferably titanium tetrachloride is used.

Generally, in the final solid procatalyst particles, the molar ratio of Mg:Ti can be e.g. between 10:1 to 1:10, preferably less than 6:1, such as between less than 6:1 and 1:1. Preferably 2:1-3:1.

The molar ratio of Ti:Al can be e.g. between 0.5:1 to 1:5, e.g. 1:1 to 1:2. The ratios can be determined in a manner known in the art.

The obtained procatalyst of the invention has surprising properties and combination of properties, which are not achieved by the catalysts known from the state of the art, like high activity in polymerizing olefins, an improved morphology and a good balance of activity under different hydrogen partial pressures. Furthermore the procatalyst of the invention enables for the production of polyethylene polymers with narrow PDI values down to 3.0 and good homogeneity of polymer.

The final procatalyst, e.g. the ZN procatalyst, thus obtained is combined with further catalyst component(s) conventionally used in the art, such as a cocatalyst (e.g. aluminium alkyl compounds) and optionally (internal or external) electron donors, additional activators and/or modifiers. Said further catalyst component(s) can be combined with the present procatalyst during the preparation method of the present procatalyst or during the actual polymerisation step by adding the procatalyst of the invention and the further component(s) separately into a reactor.

The above described procatalyst is combined with a cocatalyst so that it can be used in a polymerisation process.

The cocatalyst is an organometallic compound of formula (VI)

$$\begin{array}{c}(RO)_z\\ |\\ R_y\text{-Al-}Cl_x\end{array}$$

wherein each R is independently a $C_1$-$C_{20}$-alkyl group, $0 \le x \le 2$; $1 \le y \le 3$; $0 \le z \le 2$ and $x + y + z = 3$, x, y and z may or may not be an integer;

Examples of suitable cocatalysts are:

Aluminium alkyls (x and z = 0; y = 3) like trimethyl aluminum, triethyl aluminum, triisobutylaluminium, tri-n-octyl aluminum and isoprenyl aluminum. Especially triisobutylaluminium is preferred.

Aluminium alkyl halides ($z = 0$; $0 < x \leq 2$; $1 \leq y < 3$) like diethyl aluminium chloride, ethyl aluminium dichloride, dipropyl aluminium chloride, propyl dibutyl aluminium chloride, butyl aluminium dichloride, methyl aluminium dichloride, dimethyl aluminium chloride

Aluminium alkoxy compounds ($0 < z \leq 2$, $x = 0$; $1 \leq y < 3$) like diethyl aluminium ethoxide, diethyl aluminium propoxide, ethyl aluminium diethoxide, dipropyl aluminium ethoxide, di (iso)butyl aluminium ethoxide, (iso)butyl aluminium diethoxide, methyl aluminium propoxide, dimethyl aluminium ethoxide, or any combinations of alkyl and alkoxy groups.

Alternatively, the cocatalyst may be a mixture of compounds selected from the group consisting of tri-$C_1$-$C_{10}$ alkyl aluminum compounds, where one of the components comprises short-chained alkyl groups (1 - 3 carbon atoms) and the other component comprises long-chained alkyl groups (4 - 20 carbon atoms). Examples of suitable aluminum alkyls comprising short-chained alkyl groups are trimethyl aluminum and in particular, triethyl aluminum. Examples of suitable components comprising long-chained alkyl groups are tri-n-octyl aluminum and in particular isoprenyl aluminum. In particular, the cocatalyst is a mixture of isoprenyl aluminum and triethyl aluminum or isoprenyl aluminum and trimethyl aluminum.

The molar ratio between the aluminium in said cocatalyst and the Ti of said procatalyst is preferably 1:1 - 100:1, more preferably 2:1 - 50:1 and most preferably 3:1 - 20:1.

The procatalyst and the cocatalyst may be contacted with each other prior to their introduction into the polymerisation reactor. However, it is equally well possible to introduce the two catalyst components separately into the reactor.

The procatalyst of the invention can be used as such or together with the separate cocatalyst as a Ziegler-Natta catalyst for the (co)polymerisation of an olefin in a manner known in the art.

It is also possible to combine said catalyst with one or more other ZN and/or non-ZN catalysts.

Thus, another aspect of the present invention relates to the use of said procatalyst for the production of olefin polymers, preferably polyethylene or polypropylene.

According to yet another aspect of the invention, olefin polymers obtainable in a process making use of said procatalyst are provided.

The present catalyst system is especially suitable for the production of polyethylene homo- or copolymers

With the catalyst system according to the invention it is further possible to produce different kinds of polyethylene, like linear low density polyethylene (LLDPE), medium density polyethylene (MDPE) and high density polyethylene (HDPE) in the gas phase or in a slurry polymerization.

Suitable polyolefins comprise polyethylene homopolymers and copolymers comprising from 0 to 20 wt % $C_3$ to $C_{30}$-alpha-olefin or $C_4$ to $C_{30}$-diene-derived units, and more particularly a copolymer or terpolymer of ethylene and/or propylene with 0 to 10 wt % alkenes, for example 1-propene, 1-butene, 1-pentene, 4-methyl-pent-1-ene, 1-hexene, cyclohexene, 1-octene and norbornene, or dienes, for example butadiene, hexadiene or octadiene.

In a preferred embodiment the polyolefins produced by using the special improved Ziegler-Natta catalyst system are ethylene homopolymers or ethylene copolymers or terpolymers with one or more comonomers. Preferable comonomers are $C_3$-$C_{12}$ olefins, preferably $C_4$-$C_{10}$ olefins, such as 1-butene, isobutene, 1-pentene, 1-hexene, 4-methyl-1-pentene, 1-heptene, 1-octene, 1-nonene, 1-decene, as well as diene, such as butadiene, 1,7-octadiene and 1,4-hexadiene, or cyclic olefins, such as norbornene, and any mixtures thereof.

So the catalyst system of the invention can be used for the production of ethylene homo-, co- or terpolymers.

In a further preferred embodiment polyethylene compositions contain as comonomers 0 to 20 wt % $C_3$ to $C_{30}$-alpha-olefins, preferably $C_3$ to $C_{10}$-alpha-olefins, more preferably $C_3$ to $C_6$-alpha-olefins, and most preferably butene or hexene, or mixtures thereof.

The ethylene homopolymer and copolymer compositions of the invention have a density in the range of about 860 kg/$m^3$ to about 970 kg/$m^3$, preferably about 880 to 970 kg/$m^3$, more preferably between about 890 to about 970 kg/$m^3$ and most preferably between about 895 to 970 kg/$m^3$.

The polyolefin composition further can show unimodal, bimodal or multimodal molecular weight distribution.

Polymerisation may be effected in one or more, e.g. one, two or three polymerisation reactors, using conventional polymerisation techniques, in particular gas phase, solution phase, slurry or bulk polymerisation. Polymerisation can be a batch or continuous polymerisation process.

Polymerization can be a one stage or a two or multistage polymerisation process carried out in at least one polymerisation reactor. Multimodal polymers with respect to the molecular weight distribution (MWD) are produced in a multistage process, where low molecular weight and higher molecular weight polymers are produced in different polymerisation steps, in any order. Different combinations for producing multimodal polymers can be used, e.g. gas-gas phase, slurry-slurry phase, slurry-gas phase processes; slurry-gas phase polymerisation being a preferred one. Unimodal polymers can be produced in a one stage polymerisation, although more than one stage is possible, but then polymers with approximately the same molecular weight are produced in each stage. Any type of polymerisations as listed above are possible, however, slurry process being one preferred process.

In addition to the actual polymerisation the process configuration can comprise any pre- or post reactors.

For slurry reactors, the reaction temperature will generally be in the range of 40 to 110 °C (e.g. 60 - 110 °C),

the reactor pressure will generally be in the range 10 to 80 bar, and the residence time will generally be in the range 0.3 to 5 hours (e.g. 0.5 to 2 hours). For ethylene full scale polymerizing process typical temperatures are between 70 and 105 °C and pressure is usually between 40 and 70 bar. The diluent used will generally be an aliphatic hydrocarbon having a boiling point in the range of- -70°C to +100 °C. In such reactors, polymerisation may, if desired, be effected under supercritical conditions.

For gas phase reactors, the reaction temperature used will generally be in the range 60 to 115 °C (e.g. 70 to 110 °C), the reactor pressure will generally be in the range 10 to 30 bar, and the residence time will generally be 1 to 8 hours.

Generally the quantity of catalyst used will depend upon the nature of the catalyst, the reactor types and conditions and the properties desired for the polymer product.

The melt flow rate and the density as well as the molecular weight of the resulting ethylene homo-, co- or terpolymers can be controlled independently over wide ranges.

**METHODS:**

**Melt flow rates (MFR)** are measured under a load of 2.16kg, 5kg and 21.6 kg and at 190 °C according to ISO 1133 and are indicated in g/10 min..

**Flow Rate Ratio (FRR)**

The quantity FRR (flow rate ratio) is an indication of molecular weight distribution and denotes the ratio of flow rates at different loads. Thus, $FRR_{21/2}$ denotes the value of $MFR_{21}/MFR_2$ and $FRR_{21/5}$ denotes the value of $MFR_{21}/MFR_5$.

**GPC: Molecular weight averages, molecular weight distribution, and polydispersity index (Mn, Mw, MWD, PDI)**

Molecular weight averages (Mw, Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99. A Waters GPCV2000 instrument, equipped with differential refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert butyl-4-methyl-phenol) as solvent at 140 °C and at a constant flow rate of 1 mL/min. 209.5 μL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants for PS, PE and PP used are as per ASTM D 6474-99. All samples were prepared by dissolving 0.5 - 4.0 mg of polymer in 4 mL (at 140 °C) of stabilized TCB (same as mobile phase) and keeping for max. 3 hours at max. 160°C with continuous gentle shaking prior sampling into the GPC instrument.

**Density** of the polymer was determined according to ISO 1183-1987 on compression-moulded specimens.

**Bulk Density (BD)** was determined according to ASTM D1895-96, method A, by filling a container with known volume (100ml) with polymer powder and measuring the weight of polymer.

**Comonomer content** of the obtained products was measured in a known manner based on Fourier transform infrared spectroscopy (FTIR) calibrated with $^{13}$C-NMR, using Nicolet Magna 550 IR spectrometer together with Nicolet Omnic FTIR software.

Films having a thickness of about 220 to 250 μm were compression moulded from the samples. Similar films were made from calibration samples having a known content of the comonomer. The thicknesses were measured from at least five points of the film. The films were then rubbed with sandpaper to eliminate reflections. The films were not touched by plain hand to avoid contamination. For each sample and calibration sample at least two films were prepared. The films were pressed from pellets by using a Graceby Specac film press at 150 °C using 3 + 2 minutes preheating time, 1 minute compression time and 4 to 5 minutes cooling time. For very high molecular weight samples the preheating time may be prolonged or the temperature increased.

The comonomer content was determined from the absorbance at the wave number of approximately 1378 $cm^{-1}$. The comonomer used in the calibration samples was the same as the comonomer present in the samples. The analysis was performed by using the resolution of 2 $cm^{-1}$, wave number span of from 4000 to 400 $cm^{-1}$ and the number of sweeps of 128. At least two spectra were run from each film.

The comonomer content was determined from the spectrum from the wave number range of from 1430 to 1100 $cm^{-1}$. The absorbance is measured as the height of the peak by selecting the so-called short or long base line or both. The short base line is drawn in about 1410 - 1320 $cm^{-1}$ through the minimum points and the long base line about between 1410 and 1220 $cm^{-1}$. Calibrations need to be done specifically for each base line type. Also, the comonomer content of the unknown sample needs to be within the range of the comonomer contents of the calibration samples.

**Elemental analysis of the catalysts**

The elemental analysis of the catalysts was performed by taking a solid sample of mass, M, cooling over dry ice. Samples were diluted up to a known volume, Vol, by dissolving in nitric acid ($HNO_3$, 65 %, 5 % of Vol) and freshly deionised (DI) water (95 % of Vol), the samples were left to stabilise for two hours.

The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$ in DI water), a low standard (10 ppm Al in a solution of 5 % $HNO_3$ in DI water, a high standard (100 ppm Mg, 50 ppm Al, 50 ppm Ti in a solution of 5 % $HNO_3$ in DI water) and a quality control sample (50 ppm Mg, 20 ppm Al, 20 ppm Ti in a solution of 5 % $HNO_3$ in DI water).

The content of aluminium was monitored via the 167.081 nm line, when Al concentration in ICP sample was between 0-10 ppm and via the 396.152 nm line for Al concentrations between 10-100 ppm. The magnesium concentration was monitored via the 285.213 nm line and the titanium content via the 323.452 nm line.

The reported values, required to be between 0 and 100, or further dilution is required, are an average of three successive aliquots taken from the same sample and are related back to the original catalyst using equation 1.

$$C = (R \times Vol)/M \qquad \text{Equation 1}$$

Where: C is the concentration in ppm, related to % content by a factor of 10,000
R is the reported value from the ICP-AES
Vol is the total volume of dilution in ml
M is the original mass of sample in g

If dilution was required then this also needs to be taken into account by multiplication of C by the dilution factor.

**Differential Scanning Calorimeter (DSC)**

The Melting Temperature ($T_m$) was measured with Mettler TA820 differential scanning calorimeter (DSC) on $3 \pm 0.5$ mg samples. Melting curves were obtained during 10°C/min cooling and heating scans between -10 - 200°C. Melting temperature was taken as the peaks of endotherms. The degree of crystallinity was calculated by comparison with heat of fusion of a perfectly crystalline polyethylene, i.e. 290 J/g.

**EXAMPLES:**

All synthesis have been performed under purified nitrogen blanket and all solvents used have been purified with all suitable agents used by persons skilled in the art.

**Example 1a: Preparation of Mg-Complex**

7.9 g (60.8 mmol) of 2-ethyl-1-hexanol was added slowly to 27.8 g (33.2 mmol) of 20 % solution of BOMAG ($Mg(Bu)_{1,5}(Oct)_{0,5}$) in toluene. The reaction temperature was kept under 35°C. This complex was used in the following catalyst preparations. 2-ethyl-1- hexanol/butyl-octyl-magnesium molar ratio was 1.83 : 1.

**Example 1:**

254 g XPO- 2485 (silica, Grace), calcinated at 600°C, was dispersed in 3.5 ml pentane/g Si. 0.7 mmol TEA/g silica (215 ml solution, 140 g solution, 20.3 g neat) was added into the catalyst preparation reactor and allowed to react during 60 min at 25°C. Further 1.6 mmol EADC/g Si (452 ml solution, 298 g solution, 52 g neat) was added into the catalyst preparation reactor and allowed to react during 60 min at 25°C. Further 2.1 mmol 2-ethyl-1-hexanolato-magnesium / g silica (2.1 mol BOMAG: 3.84 mol 2-ethyl-1-hexanol, 719 g solution, 518 g neat) was added into the catalyst preparation reactor. The dispersion was mixed in 60 min at 35°C. Dry air was purged into the reactor. The solvent was decanted off from the reactor. Fresh pentane (3,5 ml/g Si) was added into the reactor to form a complete dispersion. The decanting procedure was repeated 3 times. The reactor was pressurised with nitrogen and depressurised. The pressure/depressurising procedure was repeated 20 times. 4 ml pentane was added to the reactor until a complete dispersion was achieved. Finally 0.79 mmol $TiCl_4$/ g silica (0.22 ml, 38 g) was added. The dispersion was stirred for 1 hour at 55°C. The jacket temperature of the catalyst preparation vessel was increased to 95°C and valves were opened to allow hydrocarbons to evaporate. A yellow powder was obtained. 3.3 wt-% Al, 2.9 wt-%Mg, 2.8 wt-%Ti. Hydrocarbon

content was 1 wt-%.

The productivity in homopolymerisation in bench-scale was 10.4 kg/g catxh. $MFR_2$=0.53g /10 min. $FRR_{21/2}$=27,6

**Example 2:**

5.0g XPO-2485 (Silica, from Grace); calcinated at 600°C, was charged into the catalyst preparation vessel under inert conditions and dispersed in 25 ml of pentane. 2.85 ml of a 20% TEAL (0,7 mmol/g Si) heptanes solution was further added into the catalyst preparation vessel. The dispersion was mixed for 75 min at 20°C. 3.3ml of a 17% EADC (0,6 mmol/g Si) pentane solution was added to the dispersion in the catalyst preparation vessel and the dispersion was stirred for 80min at 20°C. 2.46ml of a 20% BOMAG (0.5 mmol/g Si) pentane solution was further added in to the catalyst preparation vessel and the dispersion was further mixed 80 min at 20°C. 50 ml air dried over molecular sieve was inserted into the catalyst preparation vessel and the mixture was stirred during 1h at room temperature. The silica precursor impregnated with chemicals as described above was dried under pure and oxygen free nitrogen for 1h. 25 ml pentane was added into the catalyst preparation vessel and the impregnated silica precursor was dispersed into the pentane. 5.5ml of a 17% EADC (1.0mmol/g Si) pentane solution was added to the dispersion and the mixture was stirred for 40 min at room temperature. Further 6.4ml of a complex (0.9 mmol/g Si) formed from 2-ethyl-1-hexanol and BOMAG-A in the molar ratio 1.83:1 was added to the reaction vessel and the dispersion was stirred during 60 min at room temperature. 0.38 ml of $TiCl_4$ (0.7 mmol/g Si) was further added into the reaction vessel and the dispersion was stirred for 120 min at room temperature. Finally the mixture was dried at 40°C in purified nitrogen for 120min. The yield was 8.3 g. Al 3.5 wt%; Mg 2.3 wt%; Ti 1.9 wt%

**Comparative example CEX 1:**

480 kg ES757, calcinated at 600°C, was added into a catalyst preparation vessel equipped with a stirrer. 1.6 mmol/g Si of EADC (20% solution in pentane) were added. Reaction temperature maximum 35°C. Mixing time 2h.
A complex consisting of 2-ethyl-1-hexanol and Bomag-A in molar ratio 1.83 to 1 was prepared as described above.. The complex pentane solution (1.4 mmol Mg/g Si) was added during 90 min into the mixing tank. After the complex addition the mixture was stirred for 5h. Reactor temperature was 35°C during mixing. Finally titanium tetrachloride (0.7 mmol/g Si was added during 45 min and the mixing tank was stirred for 5h at 45°C.

The catalyst was dried under nitrogen flow 2h at 60°C, 2h at 80°C + 95°C until hydrocarbon level was below 10 wt-%

The yield was 670kg. Al 3.0wt%; Mg 2.3 wt%; Ti 2.2wt%

Productivity in homopolymerisation 8.7 kg PE/g cat,h, $MFR_{2.16}$=1.17 $MFR_{21.6}$=34,0, $FRR_{21/2}$=29.0

**Example 3:**

**Copolymerization of ethylene and hexane**

A 3 l autoclave reactor was used. 1800 ml (987 g, 17.0 mol) of iso-butane was introduced into the reactor as reaction medium. After adding the polymerisation medium the temperature of the reactor system was set to 85 °C. The catalyst and the co-catalyst were fed into the reactor by means of two feed vessels that were connected in line to the reactor lid. About 100 mg of the catalyst was added into the upper feed vessel together with 10 ml (6.3 g, 87 mmol) of pentane. 0,5ml of 20 w-% heptane solution of tri-ethyl-aluminium (TEA) was used as co-catalyst. The co-catalyst was first let into the reactor and the catalyst was after that introduced by pressurising the upper feed vessel to 30 bar with $N_2$ and there after letting the over pressure push in the catalyst in to the reactor. This manoeuvre was done three times. Two additional feed vessels were connected in series between the lid of the reactor and the ethene monomer feed line. 150 ml of hexene co-monomer was introduced into the lower feed vessel. 3bar H2 / 500ml cylinder were added into feed vessel. The polymerisation was started by opening the monomer feed line and thereby introducing the hydrogen, the co-monomer and the ethene monomer. Partial pressure of added ethene was 6.7 bar. A pressure of about 22.5 bar was maintained by the ethene feed trough out the test polymerisation. The co-polymerisation was carried out at 85 °C. The co-polymerisation was continued until 200 g of co-polymer was produced. The polymerisation was stopped by venting off the monomer and the iso-butane.

The polymerization results are found in table 1.

Table 1:

| EXAMPLE: | Example 2 | CEX 1 |
|---|---|---|
| | | |
| kgPO/g.cat.hr | 7,4 | 7,1 |
| kgPO/g.Ti.hr | 390 | 356 |
| $MFR_2$ | 0,92 | 1,65 |
| $MFR_5$ | 2,7 | n.d. |
| $MFR_{21}$ | 23,9 | 44,2 |
| FRR(21/2) | 26 | 26,7 |
| FRR(21/5) | 8,9 | n.d. |
| BD, $kg/m^3$ | 330 | 330 |
| $C_6$-cont., w-% | 3,9 | 5,5 |
| GPC Mw | 115 000 | 126 000 |
| GPC Mn | 37 200 | 24 400 |
| PDI | 3,1 | 5,2 |
| Density $kg/m^3$ | 931,1 | 930,2 |
| DSC, T °C | 124,7 | 124,9 |
| DSC, crys. % | 47 | 48,6 |
| Al/Ti | 15 | 15 |

## Claims

**1.** Process for preparing an improved solid procatalyst of a Ziegler-Natta catalyst system comprising the following steps:

a) reacting an metal alkyl with the formula (I) $Al(R^1)_3$, wherein each $R^1$ independently represents an alkyl group of 1 to 6 carbon atoms with
an alkyl metal halide compound of the formula (II)
$Al(R^2)_mX_{3-m}$, wherein each $R^2$ independently represents an alkyl group of 1 to 6 carbon atoms; each X is independently a halogen; $0 \leq m < 3$ and m may or may not be an integer
whereby the metal alkyl of the formula (I) or the alkyl metal halide of the formula (II) has been first contacted with an inert carrier, to give a first reaction product
b) treating the first reaction product with oxygen ($O_2$) or a gas containing oxygen ($O_2$) to give a second reaction product ,
c) either the first reaction product or the second reaction product is reacted with a magnesium compound of the formula (III)
$R^3_n(OR^4)_{2-n}Mg$, wherein $R^3$ and $R^4$ independently represent a $C_1$-$C_{20}$ alkyl group and $0 \leq n \leq 2$ and n may or may not be an integer,
yielding a procatalyst precursor
d) optionally contacting the procatalyst precursor with an alkyl metal halide compound of the formula (II)
$Al(R^2)_mX_{3-m}$, wherein each $R^2$ independently represents an alkyl group of 1 to 6 carbon atoms; each X is independently a halogen; $0 \leq m < 3$ and m may or may not be an integer and/or with
a magnesium compound of the formula (III)
$R^3_n(OR^4)_{2-n}Mg$, wherein $R^3$ and $R^4$ independently represent a $C_1$-$C_{20}$ alkyl group and $0 \leq n \leq 2$ and n may or may not be an integer, and
e) contacting either the procatalyst precursor or the reaction product of step d) with a titanium halide compound having the formula (IV)
$(OR^5)_pTiX^2_{4-p}$, wherein each $R^5$ independently represents a $C_1$-$C_{20}$ alkyl group, each $X^2$ is independently a halogen; $0 \leq p \leq 3$ and p may or may not be an integer,
in order to yield the solid procatalyst.

**2.** Process according to claim 1, wherein the first reaction product is reacted with a magnesium compound of the formula (III) $R^3_n(OR^4)_{2-n}Mg$, wherein $R^3$ and $R^4$ independently represent a $C_1$-$C_{20}$ alkyl group and $0 \leq n \leq 2$ and n may or may not be an integer.

**3.** Process according to claim 1 wherein according to a Variant A the metal alkyl of the formula (I) is first contacted with an inert carrier before the reaction with the alkyl metal halide compound of the formula (II) and optionally the magnesium compound of the formula (III).

**4.** Process according to claim 1 wherein according to a Variant B the alkyl metal halide compound of the formula (II) is first contacted with an inert carrier before the reaction with the metal alkyl of the formula (I) and optionally the magnesium compound of the formula (III).

**5.** Process according to claim 4 wherein according to a Variant B the alkyl metal halide compound of the formula (II) is first contacted with an inert carrier before the reaction with a mixture of the metal alkyl of the formula (I) and the magnesium compound of the formula (III).

**6.** Process according to any of preceding claims 1 to 5 wherein as inert carrier silica is used.

**7.** Process according to any of preceding claims 1 to 6 wherein as metal alkyl of the formula (I) trimethylaluminium, triethylaluminium or triisobutylaluminium, as alkyl metal halide compound of the formula (II) dimethyl aluminium chloride, diethyl aluminium chloride, diisobutyl aluminium chloride, ethyl aluminium dichloride or methyl aluminium dichloride, as magnesium compound of the formula (III) a conduct product of di-$C_1$-$C_{10}$ alkyl magnesium and a $C_1$-$C_{12}$ alcohol and as titanium halide compound having the formula (IV) titanium tetrachloride are used.

**8.** Process according to any of preceding claims 1 to 7 wherein step b) is carried out in slurry, whereby the first reaction product is suspended in a hydrocarbon diluent and oxygen ($O_2$) or a gas containing oxygen ($O_2$) at a temperature between 15 and 35°C is introduced into the slurry.

**9.** Process according to any of preceding claims 1 to 8 wherein step b) is carried out under normal pressure or under a slight over pressure up to 0.5 bar over pressure compared to the pressure existing in the catalyst vessel.

**10.** Procatalyst comprising the reaction product of at least an inert carrier, a metal alkyl of the formula (I), an alkyl metal halide compound of the formula (II), a magnesium compound of the formula (III), oxygen or an oxygen containing gas and a titanium compound of the formula (IV), as defined in any of preceding claims 1 to 9, whereby the procatalyst enables the preparation of polyethylene with a PDI below 4 down to 3.

**11.** Ziegler-Natta catalyst system which comprises a procatalyst according to claim 10 and an organometallic cocatalyst of formula (VI)

$$\begin{array}{c} \quad (RO)_z \\ \quad | \\ R_y\text{-}Al\text{-}Cl_x \end{array}$$

wherein each R is independently a $C_1$-$C_{20}$-alkyl group, $0 \leq x \leq 2$; $1 \leq y \leq 3$; $0 \leq z \leq 2$ and $x + y + z = 3$, x, y and z may or may not be an integer.

**12.** Use of Ziegler-Natta catalyst system according to claim 11 for the production of polyethylene homo- or copolymers with a PDI below 4 down to 3.

Europäisches Patentamt
European Patent Office
Office européen des brevets

# EUROPEAN SEARCH REPORT

Application Number
EP 09 17 1728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 0 032 307 A2 (ICI PLC [GB])<br>22 July 1981 (1981-07-22)<br>* claims 1,6,8,9 *<br>* examples 1-7 *<br>* page 7, line 15 - line 21 *<br>----- | 10-12<br>1-9 | INV.<br>C08F4/655<br>C08F4/651<br>C08F4/02<br><br>ADD.<br>C08F210/16 |
| A | DE 100 31 293 A1 (DEGUSSA [DE] EVONIK DEGUSSA GMBH [DE])<br>15 March 2001 (2001-03-15)<br>* examples 1,3,5,7,9 *<br>* claims 1-8,16,17 *<br>----- | 1-12 | |
| A | FR 2 292 716 A2 (ASAHI CHEMICAL IND [JP])<br>25 June 1976 (1976-06-25)<br>* examples 1-6 *<br>* claims 1,5-7,9,12-16 *<br>----- | 1-12 | |

TECHNICAL FIELDS SEARCHED (IPC)

C08F

1

The present search report has been drawn up for all claims

| Place of search | Date of completion of the search | Examiner |
|---|---|---|
| Munich | 26 March 2010 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 17 1728

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2010

| Patent document cited in search report | Publication date | Patent family member(s) | Publication date |
|---|---|---|---|
| EP 0032307 A2 | 22-07-1981 | AU 6593480 A | 16-07-1981 |
| | | CA 1155828 A1 | 25-10-1983 |
| | | NZ 195950 A | 15-07-1983 |
| | | US 4324691 A | 13-04-1982 |
| DE 10031293 A1 | 15-03-2001 | NONE | |
| FR 2292716 A2 | 25-06-1976 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0688794 A
- WO 03004537 A